# EUROPÄISCHE PATENTSCHRIFT

(11) **EP 0 513 491 B1**
(45) Veröffentlichungstag und Bekanntmachung des Hinweises auf die Patenterteilung: **07.12.1994**
(21) Anmeldenummer: 92104454.1
(22) Anmeldetag: 16.03.1992
(51) Int. Cl.: B60H 1/00

(54) **Vorrichtung zum Belüften, Beheizen und/oder Kühlen von grossen Fahrzeugräumen**
Device for heating, ventilating and/or cooling compartments of large vehicles
Dispositif de chauffage, ventilation et/ou climatisation de l'habitacle des grands véhicules

(30) Priorität: 09.05.1991 DE 4115176
(43) Veröffentlichungstag der Anmeldung: 19.11.1992
(73) Patentinhaber: MERCEDES-BENZ AG, 70327 Stuttgart (DE)
(72) Erfinder: Förster, Alfred Ing., W-7056 Weinstadt (DE); Kalt, Hans-Peter, Dipl.-Ing., W-7036 Schönaich (DE); Schanzer, Hans-Peter, Dipl.-Ing., W-7120 Bietigheim-Bissingen (DE)

(56) Entgegenhaltungen:
- DE-A- 3 036 546
- DE-A- 3 406 249
- DE-A- 3 513 952
- FR-A- 2 380 909

## Beschreibung

Die Erfindung betrifft eine Vorrichtung zum Belüften, Beheizen und/oder Kühlen von großen Fahrzeugräumen, insbesondere Fahrgasträumen von Omnibussen nach dem Oberbegriff des Patentanspruches 1.

Eine derartige Vorrichtung ist durch die DE-A-30 36 546 bekannt. Die vom Dach her einsetzbare Baueinheit umfaßt dabei neben der Wasserabscheideinrichtung einen Wärmetauscher und eine Stellvorrichtung für eine Frischluft-/Umluftklappe. Andere Aggregatteile, wie insbesondere ein Gebläse werden vom Innenraum her eingebaut und auch die Wartung der gesamten Vorrichtung erfolgt nach dem Entfernen einer Abdeckung vom Innenraum aus, so daß nicht auszuschließen ist, daß bereits vor dem Beginn der eigentlichen Arbeiten an den Aggregatteilen mit dem Abnehmen der Abdeckung Schmutz in den Fahrgastraum gelangt.

Es ist Aufgabe der Erfindung, den Montageumfang am Einbauort unter Beibehaltung eines Einbaues vom Dach her zu reduzieren, wobei sichergestellt sein soll, daß nach Abschluß der Montagearbeiten ein leckfreier Luftübertritt zum Deckenkanal hin erfolgt und auch verhindert wird, daß bei Wartungsarbeiten Schmutz in den Fahrgastraum gelangen kann. Außerdem wird eine unauffällige Unterbringung der Vorrichtung, ohne daß der Gesamteindruck vom Fahrgastraum aus gestört wird, angestrebt.

Diese Aufgabe wird bei einer Vorrichtung nach dem Oberbegriff des Patentanspruches 1 durch dessen kennzeichnende Merkmale gelöst. Die vormontierte und überprüfte Baueinheit läßt sich somit als Ganzes vom Dach her einfahren, wobei durch die Ausrichtung der einander zugeordneten Luftübertrittswände beim Absenken eine Beschädigung der zwischengeschalteten Dichtung ausgeschlossen ist. Die Verkleidung, die die Wanne mit Abstand umgibt, deckt diese ab und bildet im Zusammenhang mit ihrer Stauraumbegrenzungsfunktion ein kostengünstiges Mehrfachfunktionsteil. Die Wartung der Wasserabscheideinrichtung und der Aggregatteile vom Dach her gestaltet sich einfach, zumal ja die Anordnung in Scheibennähe getroffen ist. Bei derartigen Arbeiten besteht keine Verschmutzungsgefahr für den Fahrgastraum, da bei geschlossener Umluftöffnung die Aggregatteile hermetisch vom Innenraum abgetrennt sind.

Bei einem bevorzugten Ausführungsbeispiel der Erfindung führt von der tiefsten Stelle des Bodens der Wanne eine Leitung weg, über die zusammen mit abgeschiedener Feuchtigkeit auch niedergeschlagene Schmutzpartikel ausgeschieden werden, so daß im Bedarfsfall auch eine Säuberung mittels eines Dampf- oder Wasserstrahles möglich ist.

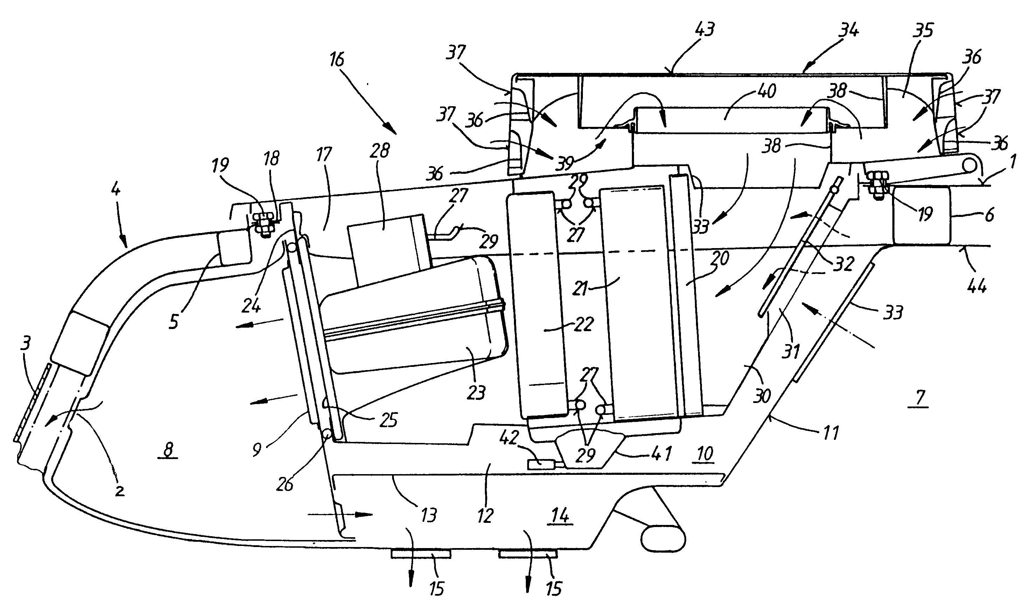

Ein Ausführungsbeispiel der Erfindung wird nachfolgend anhand der Zeichnung näher erläutert.

In der heckseitigen Dachaußenseite 1 eines nicht näher dargestellten Omnibusses ist in nicht gezeigter spiegelbildlicher Anordnung eine Öffnung 2 eingelassen, die im Anschluß an den herumgeführten, sich an eine Seitenscheibe 3 anschließenden Dachbereich 4 vorgesehen ist und durch tragende Teile, wie Spanten 5 und 6 ausgesteift ist. Unterhalb des Dachbereiches 4 erstreckt sich ein nahezu über die gesamte Länge des Fahrgastraumes 7 reichender Deckenkanal 8, von dem aus die Seitenscheibe 3 mit Luft beaufschlagt wird und der eine Öffnung 9 zu einem Raum 10 hin aufweist, der wesentlich durch eine den Deckenkanal 8 unterseitig überdeckende Verkleidung 11 mit seitlichen Schottwänden 12 gebildet wird, von denen nur eine gezeigt ist. Eine durchgehende Trennwand 13, die im Anschluß an die gezeigte Schottwand 12 eine Gepäckauflagefläche bildet, schafft eine untere Trennfläche zu einem Kanal 14, der vom Deckenkanal 8 aus mit Luft versorgt wird und der den Insassen zugeordnete Luftausströmer 15 aufweist. Durch nicht dargestellte, zur Deckenverkleidung 44 hin gerichtete Luftaustrittsdüsen strömt Luft zum oberen Bereich des Fahrgastraumes 7 hin ab, wie dies durch einen Pfeil "A" verdeutlicht ist.

Der in vorstehend beschriebener Weise umgrenzte Raum 10 nimmt eine Baueinheit 16 in Form einer Wanne 17 auf, die durch die dachseitige Öffnung 2 eingelassen wird und sich über eine Montageplatte 18 an der Dachaußenseite 1 abstützt, mit der sie durch Schraubverbindungen 19 verbunden ist. Die Wanne 17 ist mit einem Filter 20, einem als Verdampfer ausgebildeten ersten Wärmetauscher 21, einem als Heizeinrichtung fungierenden zweiten Wärmetauscher 22 und nachgeschalteten Gebläsen 23 versehen, von denen nur eines ersichtlich ist. Die von den Gebläsen 23 geförderte Luft gelangt durch eine in einer einwärts gerichteten Seitenwand 24 der Wanne 17 eingelassene Luftübertrittsöffnung 25 durch die Öffnung 9 in den Deckenkanal 8, wobei durch eine zwischengeschaltete Dichtung 26 ein leckagefreier Luftübertritt erfolgt. Aufgrund der Schräganordnung der Dichtung 26, die als evakuierbarer Schlauch ausgebildet sein kann, besteht beim Ein- und Ausbau der Baueinheit 16 keine Beschädigungsgefahr für die Dichtung 26.

Die Anschlußleitungen 27 für die beiden Wärmetauscher 21 und 22 sowie für den Gebläsemotor 28 sind durch Leitungsdurchführungen 29 der Wanne 17 geführt und können vor dem Absenken der Baueinheit 16 in den Raum 10 über nicht gezeigte Schnellverschlüsse bzw. Steckverbindungen an zugeordnete, gleichfalls nicht dargestellte Leitungen angeschlossen werden. In der der Seitenwand 24 gegenüberliegenden Seitenwand 30 befindet sich eine Öffnung 31, die durch eine Frischluft-Umluftklappe 32 abgedeckt ist und im Bedarfsfall freigegeben werden kann, wobei dann Innenraumluft - wie mit gestrichelten Pfeilen angedeutet - durch eine Ansaugöffnung 33 in der Verkleidung 11 in Richtung des Filters 20 strömt.

Im Umluftbetrieb 3 legt sich die Frischluft-Umluftklappe 32 dichtend an den Luftaustrittsstutzen 33 einer die Wanne 17 überdeckenden Luftansaughutze 34. Über einen vorderen, staudruckbeaufschlagten Lufteinlaß 35 und bei großem Luftbedarf auch über seitliche, mit Rückschlagklappen 36 versehene Luftansaugöffnungen 37 strömt Außenluft unter Passieren einer durch Prallwände 38 gebildeten Wasserabscheideinrichtung 39 zu einem gröbere Verunreinigungen zurückhaltenden Filter 40 und dann zum Luftaustrittsstutzen 33. Die Luftansaughutze 34 ist schwenkbeweglich mit der Wanne 17 verbunden, so daß bei weggeschwenkter Luftansaughutze 34 die Aggregate in der Wanne 17 zu Wartungs- und Reparaturarbeiten gut zugänglich sind. Von der tiefsten Stelle des Bodens 41 der Wanne 17 führt eine Leitung 42 weg, in der neben vom Wärmetauscher 21 abgeschiedenes Kondenswasser auch bei Reinigungsarbeiten anfallende Schmutzpartikel und gegebenenfalls Reinigungsflüssigkeit abgeführt wird. Die haubenartige Abdeckung 43 der Luftansaughutze 34 ist leicht abnehmbar gestaltet, so daß auch der Filter 40 von seiner Anströmseite her zugänglich ist und im Bedarfsfall gesäubert werden kann.

## Patentansprüche

1. Vorrichtung zum Belüften, Beheizen und/oder Kühlen von großen Fahrzeugräumen, insbesondere Fahrgasträumen von Omnibussen, bestehend aus einer Baueinheit (16), die vom Dach her in eine heckseitige Aufnahme absenkbar ist, wobei die Baueinheit (16), der dachseitig eine eine Wasserabscheideinrichtung (39) beinhaltende Luftansaughutze (34) vorgeschaltet ist, alle notwendigen Aggregatteile wie Filter (20, 40), Wärmetauscher (21, 22) und Gebläse (23) umfaßt und Leitungsdurchführungen sowie eine mit einer Öffnung eines Deckenkanales (8) korrespondierende Luftübertrittsöffnung (25) vom Gebläse (23) aus aufweist und von einer entfernbaren, die Aggregatteile vom Dach her zugänglich machenden Abdeckung (43) überdeckt sowie fahrgastraumseitig von einer Verkleidung (11) abgedeckt ist,
**dadurch gekennzeichnet,**
daß die Baueinheit (16) eine Wanne (17) umfaßt, die oberseitig von einer Montageplatte (18) begrenzt wird, die an der durch tragende Teile (Spanten 5, 6) ausgesteiften Dachaußenseite (1) im Bereich der seitenscheibennahen Öffnung (2) zur Anlage gebracht und an dieser befestigt wird, daß die mit dem Deckenkanal (8) korrespondierende Luftübertrittsöffnung (25) in einer einwärts gerichteten Seitenwand (24) der Wanne (17) vorgesehen ist und zum Deckenkanal (8) hin eine zwischengeschaltete Dichtung (26) aufweist, während in der der einwärts gerichteten Seitenwand (24) gegenüberliegenden Seitenwand (30) eine dort eingelassene Öffnung (31) durch eine Frischluft-Umluftklappe (32) abdeckbar ist, daß die Verkleidung (11) im Anschluß an die Wanne (17) in Richtung des Deckenkanales (8) einen etwa die Querschnittsform der Wanne (17) aufweisenden Stauraum zumindest bereichsweise begrenzt, und daß die Luftansaughutze (34) einen Bestandteil der haubenartigen Abdeckung (43) bildet und schwenkbeweglich mit der Montageplatte (18) verbunden ist.

2. Vorrichtung nach Anspruch 1,
**dadurch gekennzeichnet,**
daß von der tiefsten Stelle des Bodens (41) der Wanne (17) eine Leitung (42) wegführt, über die zusammen mit abgeschiedener Feuchtigkeit auch niedergeschlagene Schmutzpartikel ausgeschieden werden.

## Claims

1. A device for ventilating, heating and/or cooling of great vehicle spaces, particularly passenger spaces of coaches, consisting in a constructional unit (16) which can be lowered from the roof into a recess on the rear side, the constructional unit (16), in front of which on the roof side an air suction hood (34) containing a water separation device (39) is mounted, comprising all necessary unit parts such as filters (20, 40), heat exchangers (21, 22) and fan (23), and having duct passages as well as an air overflow opening (25) from the fan (23) corresponding with an opening of a roof channel (8) and being upwardly covered by a removable cover (43) making the unit parts accessible from the roof, as well as being covered from the passenger side by a covering (11), characterized in that the constructional unit (16) contains a vat (17) which is defined on the upper side by an assembly plate (18) which is made to apply on the roof outer side (1) reinforced by supporting parts (ribs 5, 6) in the region of the opening (2) close to the side pane and secured thereto, in that the air overflow opening (25) corresponding with the roof channel (8) is provided in an inwardly directed side wall (24) of the vat (17) and has towards the roof channel (8) an interposed seal (26), while, in the side wall (30) opposite the inwardly directed side wall (24) an opening (31) provided there can be closed by a fresh air-ambient air flap, in that the covering (11) in connection with the vat (17), in the direction of the roof channel (8) defines at least regionally a retaining space which has substantially the cross-sectional form of the vat (17), and in that the air suction hood (34) forms a constituent part of the hood-like covering (43) and is swivellably movably connected with the mounting plate (18).

2. A device according to claim 1, characterized in that from the deepest area of the bottom (41) of the vat (17) a duct (42) leads off, along which, together with separated moisture, deposited dirt particles can also be removed.

## Revendications

1. Dispositif pour aérer, chauffer et/ou refroidir des habitacles de grande taille de véhicules, notamment des habitacles d'autobus, constitué par une unité de construction (16), qui peut être abaissée à partir du toit, dans un logement situé à l'arrière, et dans lequel l'unité de construction (16), en avant de laquelle est disposé, au niveau du toit, un auvent d'aspiration d'air (36), qui contient un dispositif (39) de séparation d'eau, contient tous les éléments d'appareillage nécessaires tels que des filtres (40), des échangeurs de chaleur (21,22) et un ventilateur (23) et possède des passages pour conduites ainsi qu'une ouverture de passage d'air (25), qui correspond à une ouverture d'un canal plafonnier (8) et s'étend à partir du ventilateur (23), et est recouvert par un dispositif de fermeture amovible (43), qui permet d'accéder aux éléments d'appareillage à partir du toit et est recouvert, du côté de l'habitacle, par un habillage (11), caractérisé par le fait
que l'unité de construction (16) comprend une cuvette (17), qui est limitée, à sa partie supérieure, par une plaque de montage (18) qui vient s'appliquer contre la face extérieure (1) du toit, qui est rigidifiée par des éléments porteurs (membrures 5, 6), au voisinage de l'ouverture (2) qui est proche des vitres latérales, et est fixée à cette ouverture, que l'ouverture de passage d'air (25), qui correspond au canal plafonnier (8), est prévue dans une paroi latérale rentrante (24) de la cuvette (17) et possède une garniture d'étanchéité intercalée (26) en direction du canal plafonnier (8), tandis que dans la paroi latérale (30) située à l'opposé de la paroi latérale rentrante (24), une ouverture (31) ménagée dans cette paroi peut être fermée par un volet (32) de circulation d'air frais (32), qu'à la suite de la cuvette (17) en direction du canal plafonnier (8), l'habillage (11) possède au moins par endroits un espace d'accumulation possédant approximativement la forme de la cuvette (17) en coupe transversale, et que l'auvent d'aspiration d'air (34) forme un élément constitutif du dispositif de fermeture en forme de capot (43) et est relié, avec possibilité de pivotement, à la plaque de montage (18).

2. Dispositif selon la revendication 1, caractérisé en ce qu'à partir de l'emplacement le plus bas du fond (41) de la cuvette (17) s'étend une canalisation (42), au moyen de laquelle les particules de saleté, également déposées conjointement avec l'humidité déposée, sont séparées.
